# EUROPÄISCHE PATENTSCHRIFT

(11) **EP 0 573 808 B1**
(45) Veröffentlichungstag und Bekanntmachung des Hinweises auf die Patenterteilung: **10.09.1997**
(21) Anmeldenummer: 93107837.2
(22) Anmeldetag: 13.05.1993
(51) Int. Cl.: G01L 1/22

(54) **Kraftmesseinrichtung für einen Kraftfahrzeugprüfstand**
Force measuring arrangement for test bench
Dispositif de mesure de force pour banc d'essai

(30) Priorität: 11.06.1992 DE 4219138
(43) Veröffentlichungstag der Anmeldung: 15.12.1993
(73) Patentinhaber: HOFMANN WERKSTATT-TECHNIK GMBH, D-64319 Pfungstadt (DE)
(72) Erfinder: Merg, Burkhard, W-6101 Bickenbach (DE)
(74) Vertreter: Nöth, Heinz, Dipl.-Phys.

(56) Entgegenhaltungen:
- EP-A- 0 083 568
- DE-A- 3 528 510
- PATENT ABSTRACTS OF JAPAN vol. 11, no. 40 (P-544)(2487) 5. Februar 1987 & JP-A-61 209 332 (TOKYO ELECTRIC CO.) 17. September 1986
- BOSCH TECHNISCHE BERICHTE Nr. 52 , Oktober 1990 , STUTTGART DE Seiten 30 - 41 F. HEINTZ, E.A. 'EINSATZMöGLICHKEITEN UND ZUKUNFTSCHANCEN "INTELLIGENTER" SENSOREN IM KRAFTFAHRZEUG'
- PATENT ABSTRACTS OF JAPAN vol. 5, no. 32 (P-50)(704) 27. Februar 1981 & JP-A-55 155 253 (NIPPON DENSO K.K.) 3. Dezember 1980

## Beschreibung

Die Erfindung betrifft eine Kraftmeßeinrichtung nach dem Oberbegriff des Patentanspruches 1. Derartige Kraftmeßeinrichtungen kommen im Bereich der Prüfstandstechnik, beispielsweise bei Bremsprüfständen für Kraftfahrzeuge zur Anwendung. Hierbei werden Biege- und Zugstäbe mit applizierten Dehnungsmeßstreifen eingesetzt (Firmenprospekt der Hofmann Werkstatt-Technik GmbH, Pfungstadt, Impressum 9402218 10.87 D, "Bremsprüfstände für Lkw/Pkw kombiniert, brekon 1/13m 1/16, 2/13). Zur Ubertragung der sehr kleinen Meßsignale (Signalspannungen im Bereich von Millivolt), der physikalischen Größe des Meßsignals (Spannungsübertragung), Leitungslängen (bis zu 30 m) der Meßgeberkabel, dem Erfordernis der parallelen Leitungsführung von Motorkabeln mit extremen Spannungstransienten und elektrischen Störfeldern ist es erforderlich, aufwendige Maßnahmen in Form von abgeschirmten Leitungen und Eingangsfiltern zu treffen.

Aus der DE-A-35 28 510 ist es bekannt, in einen Eckpunkt einer aus Dehnungsmeßstreifen bestehenden Meßbrücke, welche auf einem als Meßfeder ausgebildeten Deformationskörper aufgebracht ist, einen temperaturabhängigen Abgleichwiderstand zu schalten. Durch wahlweises Zuschalten von Widerständen, die in den mit den Enden des Abgleichwiderstandes verbundenen Leiterbahnen sich befinden, wird eine anteilige Wirkung des Abgleichwiderstandes dem einen und dem anderen Zweig der Dehnungsmeßstreifenbrücke zugeordnet.

Ferner ist es aus der EP-A-0 083 568 bekannt, einen Kraftmeßwandler mit einem Deformationskörper als Meßfühler und einer aus Dehnungsmeßstreifen bestehenden Meßbrücke, die ein kraftproportionales Ausgangssignal liefert, einen Shunt, mit dem die Meßbrücke verstimmt wird, zuzuschalten, um den gesamten Meßwandler zu kalibrieren. Durch Zuschaltung eines weiteren Shunts kann der Arbeitspunkt eingestellt werden.

Aufgabe der Erfindung ist es, ein Kraftmeßeinrichtung der eingangs genannten Art zu schaffen, mit der die Meßsignale am Ort der Erfassung der Meßsignale ("vor Ort") aufbereitet werden, so daß die Ubertragung des Meßsignals in eine Auswerteschaltung durch leitungsgebundene und nichtleitungsgebundene Störgrößen weniger beeinflußt wird.

Diese Aufgabe wird erfindungsemäß durch den Patentanspruch 1 gelöst.

Auf diese Weise wird nicht nur eine Transformation des DMS-Brückenausgangssignals in einen eingeprägten Strom erreicht, sondern es besteht auch die Möglichkeit, einen Temperaturabgleich des kompletten Meßwandlers, bestehend aus dem Kraftaufnehmer, der den Deformationskörper als Meßfühler und die applizierte DMS-Meßbrücke aufweist, sowie dem Meßumformer, welcher die kombinierbaren temperaturabhängigen Widerstände aufweist, in der Kraftmeßeinrichtung zu erreichen.

Die temperaturabhängigen Widerstände können als in Länge, Breite und Dicke definierte Leiterbahnen aus einem Material mit temperaturabhängigem Widerstandswert, beispielsweise Kupfer, auf einer gedruckten Leiterplatte, auf welcher auch die Komponenten der Meßumformerelektronik angeordnet sind, ausgebildet sein. Die temperaturabhängigen Widerstände dienen zur Kompensation des Temperaturkoeffizienten des gesamten Kraftmeßwandlers.

Je nachdem, ob der Temperaturkoeffizient negativ oder positiv ist, wird der kombinierte Widerstandswert in den einen oder in den anderen Brückenzweig geschaltet.

Für die Kombination der einzelnen temperaturabhängigen Widerstände können in einer gemeinsamen Leiterbahn vorgesehene Codierpads vorgesehen sein, wobei die kombinierbaren Widerstände mittels abgezweigter Leitungen zwischen jeweils zwei Codierpads geschaltet sind und die Verbindungsstücke zwischen den Codierpads, beispielsweise durch Wegfräsen, unterbrechbar sind. Es ist auch möglich, zunächst nicht miteinander verbundene Codierpads, z.B. durch Aufbringen von Lötzinn, in der gewünschten Weise miteinander zu verbinden.

Die Widerstände können als mäanderförmig geführte Leiterbahnen mit unterschiedlicher Länge auf der gedruckten Leiterplatte ausgebildet sein. Auf diese Weise kann man einen fein bis grob abgestuften Temperaturkoeffizientenabgleich des Meßwandlers erreichen. Durch Reihen- und Parallelschaltung der einzelnen zwischen den Codierpads befindlichen Widerständen läßt sich der für den Temperaturabgleich erforderliche Widerstandswert erzielen. Für den Temperaturabgleich sind keine aufwendigen zusätzlichen meßtechnischen Hilfsmittel erforderlich. Der Nullpunkt- und Temperaturabgleich läßt sich schnell, einfach und sicher in Zusammenwirkung mit dem Meßumformer zur Transformierung der Brückenausgangssignale in einen eingeprägten Strom erzielen.

Ferner kann in Ausgestaltung der Erfindung bzw. als weitere erfinderische Maßnahme ein automatischer Genauigkeitstest mit der Möglichkeit, die Meßwandlerempfindlichkeit zu erfassen und die gesamte Meßkette zu überprüfen, erreichen.

Dies kann dadurch gewährleistet sein, daß der Meßbrücke beim Einschalten der Brückenversorgungsspannung ein die Meßbrücke verstimmender Shunt für einen bestimmten Zeitraum zuschaltbar ist.

Hierbei kann es sich um einen auf die Gesamtempfindlichkeit, d.h. Meßwandler einschließlich Auswerteelektronik abgeglichenen Shunt handeln. Auf diese Weise kann die Auswerteelektronik mit dieser definierten "Verstimmung" der Brückenschaltung die Gesamtempfindlichkeit des Meßwandlers bzw. Meßelements bestimmen. Wenn ein nichtabgeglichener Shunt zeitlich begrenzt in die DMS-Meßbrückenschaltung geschaltet wird, kann die Auswerteelektronik mit dieser "Verstimmung" der Brückenschaltung und einer ihr mitgeteilten Gesamtempfindlichkeit eine Funktionsprüfung durchführen.

Durch das selbsttätige Zuschalten des Shunts kann auf eine zusätzliche Steuerleitung zwischen Auswerteelektronik und Meßwandler verzichtet werden. Das sehr kleine nicht verstärkte und damit sehr störempfindliche Meßsignal muß daher nicht zur Auswerteelektronik geführt werden. Nach jedem Einschalten der Meßvorrichtung ist eine automatische Überprüfung der gesamten Meßkette möglich. Bei Abweichungen außerhalb eines definierten Toleranzbandes können Fehlermeldungen ausgegeben werden. Dadurch ist eine deutliche Erhöhung der Betriebssicherheit des Meßsystems möglich. Ferner ist ein Austausch von Meßwandlern, bestehend aus dem Kraftaufnehmer und dem Meßumformer, in einem bestehenden abgeglichenen System ohne zusätzliches Nachjustieren möglich.

Ferner kann mit einem weiteren Shunt, der in die DMS-Brückenschaltung geschaltet wird, ein Nullpunktabgleich zur Arbeitspunkteinstellung für den kompletten Meßwandler erreicht werden.

Anhand der Figuren wird an Ausführungsbeispielen die Erfindung noch näher erläutert. Es zeigt:
- Fig. 1: ein Blockschaltbild mit Signalflußplan eines Ausführungsbeispiels der Erfindung;
- Fig. 2: eine DMS-Meßbrückenschaltung mit zuschaltbaren temperaturabhängigen Widerständen, welche beim dargestellten Ausführunbsbeispiel zur Anwendung kommen;
- Fig. 3 (A) und (B): Schaltbilder für die Verschaltung der temperaturabhängigen Widerstände für einen Temperaturkoeffizientenabgleich;
- Fig. 4: ein Leiterplattenlayout mit mäanderförmig geführten Leiterbahnen, welche die temperaturabhängigen Widerstände darstellen; und
- Fig. 5: eine Anwendungsform des Kraftmeßeinrichtung bei einem Bremsprüfstand für Kraftfahrzeuge.

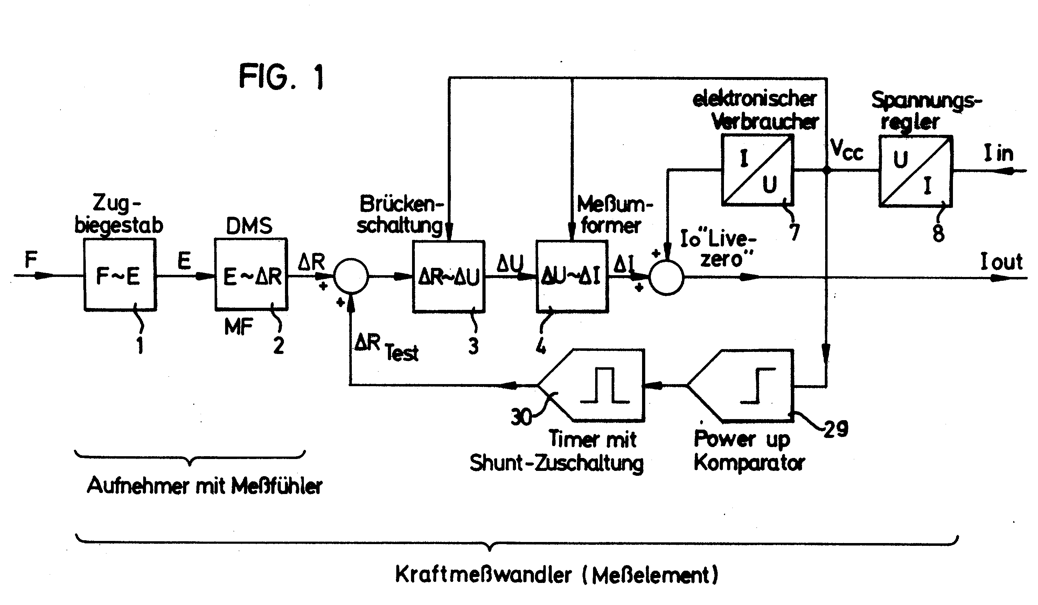

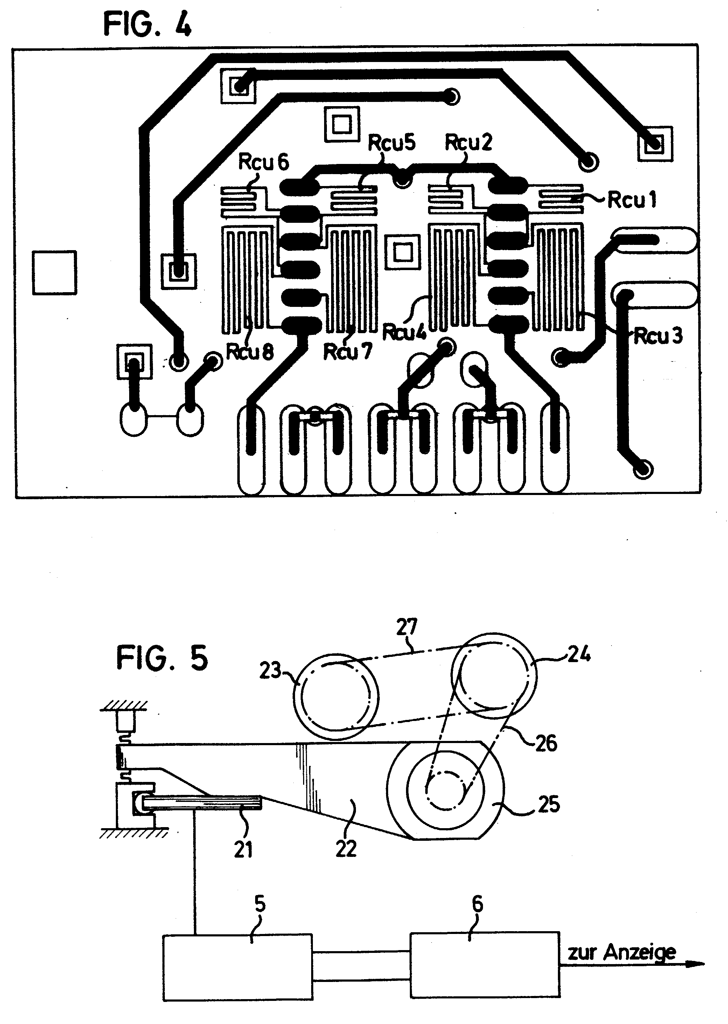

Bei dem schematisch in der Figur 1 dargestellten Ausführungsbeispiel einer Kraftmeßeinrichtung ist schematisch ein Zugbiegestab 1 vorgesehen, der beispielsweise dem Zugbiegestab 1 im noch zu erläuternden Bremsprüfstand für Kraftfahrzeuge in der Fig. 5 entspricht. Dieser Zugbiegestab ist mit einer Dehnungsmeßstreifen-(DMS)-Anordnung 2 ausgestattet. Die DMS-Anordnung 2 ist zu einer Dehnungsmeßstreifen-(DMS)-Brückenschaltung 3 verschaltet. Auf den Zugbiegestab 1 einwirkende Kräfte (F) führen zu einer Verformung (E) des Stabes, die sich als Widerstandsänderung (ΔR) der DMS-Anordnung 2 äußert. In der DMS-Brückenschaltung 3 wird diese Widerstandsänderung zu einer Spannungsänderung (ΔU) der Brückenausgangsspannung in bekannter Weise umgeformt. Der in Form eines Zug-Biegestabes 1 als Meßfühler wirkende Deformationskörper und die applizierte Dehnungsmeßstreifen anordnung 2 sowie die -Meßbrückenschaltung 3 bilden den Kraftaufnehmer des Kraftmeßwandlers bzw. Kraftmeßelements.

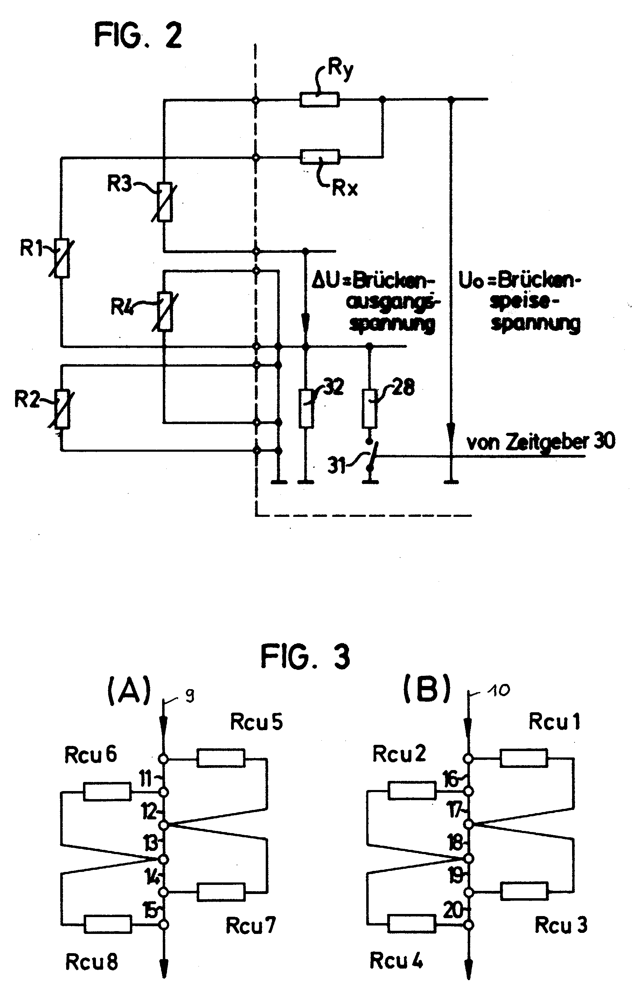

Die DMS-Brückenschaltung 3 besteht aus Brückenwiderständen R1 bis R4, die im Schaltbild der Figur 2 gezeigt sind. Die Brückenausgangsspannung wird als Ausgangssignal (ΔU) einem Meßumformer 4 weitergeleitet. Der Meßumformer 4 transformiert das Brückenausgangssignal in einen eingeprägten Strom (ΔI).

Dieser eingeprägte Strom (ΔI) wird über eine verpolsichere Zwei-Draht-Leitung als Iout einem Meßverstärker 5 und Auswerteelektronik 6 (Figur 5) zugeleitet. Der Zwei-Draht-Stromausgang Iout stellt eine analoge Gleichstromfernübertragung mit einem beispielsweise 4...20 mA-Stromintervall dar. Der Live-zero-Strom Io von 4mA dient zur Stromversorgung des Meßumformers 4 und der DMS-Brückenschaltung 3, die mit der Versorgungsspannung V_{cc} gespeist, als elektronische Verbraucher (mit 7 im Signalflußplan der Figur 1 symbolisch bezeichnet) wirken. Die Versorgungsspannung V_{cc} wird von einem Spannungsregler 8, der mit einem Eingangsstrom Iin versorgt wird, geregelt.

Wie aus Figur 2 zu ersehen ist, können den beiden Brückenzweigen R1 und R2 bzw. R3, R4 zwei Widerstandswerte Rx und Ry zugeschaltet werden. Wie die Figur 3 (A) und (B) zeigt, kann der jeweilige Widerstandswert Rx bzw. Ry aus mehreren Einzelwiderständen, die einen von der Temperatur abhängigen Widerstandswert aufweisen, gebildet werden. Die einzelnen Widerstände Rcu1 bis Rcu4, welche in den Brückenzweig der beiden Brückenwiderstände R1 und R2 (Figur 2) schaltbar sind, dienen zum Abgleich eines positiven Temperaturkoeffizienten (+ TK). Diese Widerstände sind in Figur 3 (B) dargestellt.

Die einzelnen temperaturabhängigen Widerstände Rcu5-Rcu8, welche in Figur 3 (A) dargestellt sind und als Widerstandswert Ry in den Brückenzweig der beiden Brückenwiderstände R3 und R4 schaltbar sind, dienen zur Kompensation eines negativen Temperaturkoeffizienten (- TK). Sowohl bei der Ausführungsform der Figur 3 (A) als auch der Figur 3 (B) sind jeweils vier temperaturabhängige Widerstände vorgesehen, die, wie noch erläutert wird, zu den Widerstandswerten Ry und Rx kombiniert werden können. Für eine noch feinere Abstufung des zu erzielenden Temperaturkoeffizientenabgleichs können auch noch mehr Widerstände vorgesehen sein. Wenn der Temperaturkoeffizientenabgleich gröber abgestuft sein kann, kann man auch mit weniger Widerständen auskommen.

Wie die Figuren 3 (A) und (B) zeigen, sind Codieranschlüsse, sogenannte Codierpads mittels einer gemeinsamen Leitung 9 bzw. 10, welche jeweils als gedruckte Leiterbahn ausgebildet sein kann, miteinander verbunden. Die jeweiligen temperaturabhängigen Widerstände Rcu1-Rcu8 sind in Abzweigleitungen geschaltet, die zwischen jeweils zwei Codierpads verlaufen. Die einzelnen Codierpads sind über Leiterbahnstücke 11, 12 .. 20 miteinander verbunden. Die Leiterbahnstücke 11 bis 20 können jeweils durch Fräsen unterbrochen werden. Auf diese Weise ist es möglich, bestimmten Temperaturkoeffizienten zugeordnete Widerstandswerte für Rx bzw. Ry zu kombinieren, um diese Widerstandswerte, wie oben erläutert, in den einen oder den anderen Brückenzweig je nach dem Vorzeichen des Temperaturkoeffizienten zu schalten.

In der folgenden Tabelle ist der Codierungsplan zur Erzielung der gewünschten Widerstandswerte für Rx und Ry angegeben. In dieser Tabelle sind verschiedene Werte für Temperaturkoeffizienten TK [ppm/K] angegeben. Zu den einzelnen Widerstandswerten ist in horizontaler Linie die entsprechende Codierung 1 oder 0 für die jeweiligen mit pad bezeichneten Verbindungsleitungen 11 bis 20 zwischen den einzelnen Codierpads angegeben. 1 bedeutet Kurzschluß, d.h. die jeweilige Verbindungsleitung wird belassen, und 0 bedeutet Unterbrechung der jeweiligen Verbindungsleitung.

| TK [ppm/K] | pad 15 20 | pad 14 19 | pad 13 18 | pad 12 17 | pad 11 16 |
|---|---|---|---|---|---|
| 50 | 1 | 1 | 1 | 0 | 1 |
| 100 | 1 | 1 | 1 | 0 | 0 |
| 150 | 1 | 0 | 1 | 1 | 1 |
| 175 | 1 | 1 | 0 | 1 | 0 |
| 200 | 1 | 0 | 1 | 0 | 1 |
| 250 | 1 | 0 | 1 | 0 | 0 |
| 275 | 1 | 0 | 1 | 1 | 0 |
| 300 | 0 | 0 | 1 | 1 | 1 |
| 350 | 0 | 0 | 1 | 0 | 1 |
| 375 | 0 | 1 | 0 | 1 | 1 |
| 400 | 0 | 0 | 1 | 0 | 0 |
| 475 | 0 | 1 | 0 | 1 | 0 |
| 500 | 0 | 0 | 0 | 1 | 0 |
| 700 | 0 | 1 | 0 | 0 | 0 |

Die temperaturabhängigen Widerstände Rcu1 bis Rcu8 werden, wie in Figur 4 gezeigt wird, durch mäanderförmig geführte Leiterbahnen dargestellt. Das Leiterplatten-Layout dieser Widerstände ist in der Figur 4 gezeigt. Zwischen den einzelnen Codierpads, welche jeweils zwei Anschlüsse für die einzelnen Widerstände bilden, können die Leiterbahnstücke 11 bis 20 gemäß dem Codierplan der oben gezeigten Tabelle durch Wegfräsen unterbrochen werden. Die Leiterbahnen bestehen aus Kupfer, das einen Temperaturbeiwert von 3,93 x 10⁻³/K aufweist. Durch entsprechende Bemessung der Länge und Breite sowie Dicke der Kupferleiterbahnen lassen sich bestimmte Widerstandswerte, die ein entsprechendes Temperaturverhalten in Form einer Widerstandsänderung haben, herstellen.

Im folgenden werden für ein Ausführungsbeispiel Werte der Brückenwiderstände und temperaturabhängigen Widerstände angegeben:

Die Brückenwiderstände R1 = R2 = R3 = R4 haben einen Widerstandswert von 1000Ω. Die DMS-Brückenempfindlichkeit beträgt 1,5 mV/V. Für die temperaturabhängigen Widerstände werden mäanderförmig geführte Leiterbahnen auf einer Leiterplatte verwendet. Die Leiterbahnen bestehen aus Kupfer. Kupfer hat einen Temperaturbeiwert von 3,93 x 10⁻³/K. Die temperaturabhängigen Widerstände werden so bemessen, daß Rcu1, Rcu2, Rcu5 und Rcu6 einen Temperaturkoeffizientenabgleich von 100 ppm/K bewirken. Die geometrische Dimensionierung (Breite, Dicke, Länge) der Kupferleiterbahn, welche den jeweiligen temperaturabhängigen Widerstand bildet, muß dann so dimensioniert sein, daß sich ihr Widerstandswert bei einer Temperaturänderung von 1K um 600 µ Ω verändert. Die Kupferleiterbahn für den jeweiligen temperaturabhängigen Widerstand Rcu1, Rcu2, Rcu5, Rcu6 mit beispielsweise einer Breite 100 µm und einer Dicke 35 µm hat dann eine Länge von 29,9 mm, die in Mäanderform, wie in Figur 4 gezeigt ist, auf die gedruckte Leiterplatte aufgebracht ist.

Für einen Temperaturkoeffizientenabgleich von 300 ppm/K für die jeweils restlichen temperaturabhängigen Widerstände Rcu3, Rcu4, Rcu7, Rcu8 ergibt sich bei gleicher Breite und Dicke der Leiterbahnen eine dreifache Länge von 89,7 mm, die in Mäanderform auf die gedruckte Leiterplatte aufgebracht ist.

Wie aus den Figuren 3 (A) und (B) hervorgeht, sind die temperaturabhängigen Widerstände Rcu1, Rcu3, Rcu5 und Rcu7 in der Reihenfolge aufeinanderfolgender Codierpads jeweils zwischen zwei ungeradzahligen Codierpads geschaltet. Die temperaturabhängigen Widerstände Rcu2, Rcu4, Rcu6, Rcu8 sind in der Reihenfolge aufeinanderfolgender Codierpads jeweils zwischen zwei aufeinanderfolgenden geradzahligen Codierpads geschaltet.

Die temperaturabhängigen Widerstände Rcu1 bis Rcu8 sind auf der gleichen gedruckten Leiterplatte aufgebracht wie die Komponenten des Meßumformers 4. Auf dieser gedruckten Leiterplatte kann sich auch der Spannungsregler 8 befinden. Das komplette Kraftmeßelement, bestehend aus den beiden Funktionseinheiten, nämlich dem Kraftaufnehmer 1 (Zugbiegestab), der applizierten Dehnungsmeßstreifenanorndung 2 und daraus gebildeter Meßbrücke 3 sowie dem Meßumformer und dazugehöriger Elektronik (Meßumformerelektronik) sind räumlich in einem Gehäuse als Baueinheit 21 (Figur 5) untergebracht. Diese Baueinheit 21 kann an einem Drehmomenthebel 22 eines Bremsprüfstandes für Kraftfahrzeuge angeordnet sein, wie die Figur 5 zeigt. Dieser Bremsprüfstand besitzt ferner in bekannter Weise Laufrollen 23, 24, einen Antriebsmotor 25 für beide Laufrollen, die gemeinsamen über beispielsweise Kettentriebe 26, 27 angetrieben werden.

Aus den Figuren 1 und 2 ergibt sich ferner, daß ein Shunt 28 zur Verstimmung der Brückenschaltung (R1 - R4) in die DMS-Brückenschaltung 3 geschaltet werden kann. Wenn der Shunt auf die Gesamtempfindlichkeit abgeglichen ist, läßt sich die Gesamtempfindlichkeit des Meßelements in der Auswerteelektronik 6 bestimmen. Wenn der Shunt 28 nicht abgeglichen ist, kann in der Auswerteelektronik 6 bei Verstimmung der Brückenschaltung mit diesem Shunt und einer der Auswerteelektronik mitgeteilten Gesamtempfindlichkeit eine Funktionsprüfung durchgeführt werden. Der Shunt 28 wird zeitlich begrenzt nach dem Einschalten der Meßanordnung in die DMS-Brückenschaltung 3 geschaltet. Der Einschaltzeitpunkt kann mit Hilfe eines Einschaltkomparators 29 festgestellt werden. Mit Hilfe einer Zeitschaltung 30 läßt sich die Zeit begrenzen, mit welcher der Shunt 28 in die Brückenschaltung geschaltet wird. Während dieses Zeitraumes, beispielsweise 5 sec., wird ein Schalter 31 geschlossen. Nach Ablauf dieser Zeit wird der Schalter wieder geöffnet.

Für einen Nullpunktabgleich kann zur Arbeitspunkteinstellung des gesamten Meßelements ein weiterer Shunt 32 in die DMS-Brückenschaltung 3 (R1 - R4) geschaltet werden.

## Patentansprüche

1. Kraftmeßeinrichtung für einen Kraftfahrzeugprüfstand mit einem DrehmomentHebel, der eine zu messende Kraft auf einen als Deformationskörper (1) ausgebildeten Meßfühler überträgt, und mit einer auf den Deformationskörper applizierten Dehnungsmeßstreifen (DMS)-Meßbrücke (2,3), die ein kraftproportionales Ausgangssignal liefert, daß von einem Meßumformer (4) in ein Stromsignal umgeformt wird,
dadurch gekennzeichnet,
daß mehrere temperaturabhängige Einzelwiderstände (Rcu1-Rcu4) zu einem ersten, einen negativen Temperaturkoeffizienten abgleichenden Widerstand (Rₓ) und mehrere temperaturabhängige Einzelwiderstände (Rcu5-Rcu8) zu einem zweiten, einen positiven Temperaturkoeffizienten abgleichenden Widerstand (R_{y}) kombinierbar sind, wobei der erste Widerstand in den einen Brückenzweig und der zweite Widerstand in den anderen Brückenzweig der Meßbrücke schaltbar sind.

2. Kraftmeßeinrichtung nach Anspruch 1, dadurch gekennzeichnet, daß die Einzelwiderstände für einen Temperaturkoeffizientenabgleich des gesamten Meßwandlers kombinierbar sind.

3. Kraftmeßeinrichtung nach Anspruch 1 oder 2, dadurch gekennzeichnet, daß die Einzelwiderstände als in Länge, Breite und Dicke definierte Leiterbahnen aus einem bezüglich seines Widerstandswertes temperaturabhängigen Materials in einer gedruckten Schaltung ausgebildet sind.

4. Kraftmeßeinrichtung nach einem der Ansprüche 1 bis 3, dadurch gekennzeichnet, daß die Einzelwiderstände mäanderförmig ausgebildet sind.

5. Kraftmeßeinrichtung nach einem der Ansprüche 1 bis 4, dadurch gekennzeichnet, daß der Meßumformer mit den temperaturabhängigen Einzelwiderständen auf einer gemeinsamen gedruckten Leiterplatte angeordnet ist.

6. Kraftmeßeinrichtung nach einem der Ansprüche 1 bis 5, dadurch gekennzeichnet, daß der Meßfühler mit der applizierten Dehnungsmeßstreifen (DMS)-Meßbrücke und der Meßumformer in einem gemeinsamen Gehäuse angeordnet sind.

7. Kraftmeßeinrichtung nach einem der Ansprüche 1 bis 6, dadurch gekennzeichnet, daß die Einzelwiderstände aus Kupfer bestehen.

8. Kraftmeßeinrichtung nach einem der Ansprüche 1 bis 7, dadurch gekennzeichnet, daß ein jeweiliger Einzelwiderstand zwischen zwei Codierpads geschaltet ist und die Codierpads mittels einer gemeinsamen Leiterbahn miteinander verbunden sind und daß die Leiterbahnstücke zwischen jeweils zwei Codierpads unterbrechbar sind.

9. Kraftmeßeinrichtung nach einem der Ansprüche 1 bis 8, dadurch gekennzeichnet, daß die temperaturabhängigen Einzelwiderstände mittels abgezweigter Leiterbahnen zwischen jeweils zwei Codierpads geschaltet sind.

10. Kraftmeßeinrichtung nach einem der Ansprüche 1 bis 9, dadurch gekennzeichnet, daß in der Reihenfolge aufeinanderfolgender Codierpads jeweils ein Einzelwiderstand zwischen zwei aufeinanderfolgende Codierpads mit geradzahliger Numerierung und jeweils ein Einzelwiderstand zwischen zwei aufeinanderfolgende Codierpads mit ungeradzahliger Numerierung geschaltet ist.

11. Kraftmeßeinrichtung nach einem der Ansprüche 1 bis 10, dadurch gekennzeichnet, daß der Meßbrücke beim Einschalten der Versorgungsspannung ein die Meßbrücke verstimmender Shunt für einen bestimmten Zeitraum zuschaltbar ist.

12. Kraftmeßeinrichtung nach Anspruch 11, dadurch gekennzeichnet, daß der Shunt auf die Gesamtempfindlichkeit des Meßwandlers abgeglichen ist.

13. Kraftmeßeinrichtung nach Anspruch 11 oder 12, dadurch gekennzeichnet, daß ein weiterer Shunt zur Arbeitspunkteinstellung des Meßwandlers in die Meßbrücke schaltbar ist.

## Claims

1. A force measuring arrangement for a vehicle test bench having a torque lever which transmits a force to be measured to a measuring sensor in the form of a deformation body (1), and a strain gauge strip (SGS) measuring bridge (2, 3) which is applied to the deformation body and which supplies a force-proportional output signal which is converted by a measuring transducer (4) into a current signal, characterised in that a plurality of temperature-dependent individual resistors (Rcul-Rcu4) can be combined to give a first resistor (Rx) which compensates for a negative temperature coefficient and a plurality of temperature-dependent individual resistors (Rcu5-Rcu8) can be combined to give a second resistor (Ry) which compensates for a positive temperature coefficient, wherein the first resistor can be connected into the one bridge arm of the measuring bridge and the second resistor can be connected into the other bridge arm of the measuring bridge.

2. A force measuring arrangement according to claim 1 characterised in that the individual resistors can be combined for temperature coefficient compensation of the entire measuring transducer.

3. A force measuring arrangement according to claim 1 or claim 2 characterised in that the individual resistors are in the form of conductor tracks which are defined in length, width and thickness and which comprise a material that is temperature-dependent in relation to its resistance, in a printed circuit.

4. A force measuring arrangement according to one of claims 1 to 3 characterised in that the individual resistors are of a meander configuration.

5. A force measuring arrangement according to one of claims 1 to 4 characterised in that the measuring transducer is arranged with the temperature-dependent individual resistors on a common printed circuit board.

6. A force measuring arrangement according to one of claims 1 to 5 characterised in that the measuring sensor with the applied strain gauge strip (SGS) measuring bridge and the measuring transducer are arranged in a common housing.

7. A force measuring arrangement according to one of claims 1 to 6 characterised in that the individual resistors comprise copper.

8. A force measuring arrangement according to one of claims 1 to 7 characterised in that a respective individual resistor is connected between two coder pads and the coder pads are connected together by means of a common conductor track and that the conductor track portions between each two coder pads can be interrupted.

9. A force measuring arrangement according to one of claims 1 to 8 characterised in that the temperature-dependent individual resistors are connected by means of branched conductor tracks between each two coder pads.

10. A force measuring arrangement according to one of claims 1 to 9 characterised in that in the sequence of successive coder pads a respective individual resistor is connected between two successive coder pads of evennumbered numbering and a respective individual resistor is connected between two successive coder pads of odd-numbered numbering.

11. A force measuring arrangement according to one of claims 1 to 10 characterised in that when the supply voltage is switched on a shunt which unbalances the measuring bridge can be connected in relation to the measuring bridge for a given period of time.

12. A force measuring arrangement according to claim 11 characterised in that the shunt is matched to the overall sensitivity of the measuring transducer.

13. A force measuring arrangement according to claim 11 or claim 12 characterised in that a further shunt can be connected into the measuring bridge for setting the working point of the measuring transducer.

## Revendications

1. Dispositif de mesure de force pour un banc d'essai de véhicules automobiles, comportant un levier de couple, qui transmet une force à mesurer à un capteur de mesure formé en tant que corps (1) de déformation, et comportant un pont (2,3) de mesure (DMS) à jauges de contrainte appliqué au corps de déformation, qui fournit un signal de sortie proportionnel à la force lequel est transformé par un convertisseur (4) de mesure en un signal de courant,
caractérisé en ce que
plusieurs résistances individuelles (Rcu1 à Rcu4) dépendant de la température peuvent être combinées avec une première résistance (Rx) compensant un coefficient de température négatif et plusieurs résistances individuelles (Rcu5 à Rcu8) dépendant de la température peuvent être combinées avec une seconde résistance (Ry) compensant un coefficient de température positif, la première résistance pouvant être branchée dans l'une des branches du pont et la seconde résistance pouvant être branchée dans l'autre branche du pont de mesure.

2. Dispositif de mesure de force suivant la revendication 1, caractérisé en ce que les résistances individuelles peuvent être combinées pour une compensation de coefficient de température de l'ensemble du convertisseur de mesure.

3. Dispositif de mesure de force suivant la revendication 1 ou 2, caractérisé en ce que les résistances individuelles sont formées de pistes conductrices définies en longueur, en largeur et en épaisseur et constituées d'un matériau dont la valeur de résistance dépend de la température, dans un circuit imprimé.

4. Dispositif de mesure de force suivant l'une des revendications 1 à 3, caractérisé en ce que les résistances individuelles sont en forme de méandres.

5. Dispositif de mesure de force suivant l'une des revendications 1 à 4, caractérisé en ce que le convertisseur de mesure est disposé avec les résistances dépendant de la température sur une plaque à circuits imprimés commune.

6. Dispositif de mesure de force suivant l'une des revendications 1 à 5, caractérisé en ce que le capteur de mesure comportant le pont de mesure (DMS) à jauges de contrainte appliquées et le convertisseur de mesure sont montés dans un boîtier commun.

7. Dispositif de mesure de force suivant l'une des revendications 1 à 6, caractérisé en ce que les résistances individuelles sont en cuivre.

8. Dispositif de mesure de force suivant l'une des revendications 1 à 7, caractérisé en ce qu'une résistance individuelle est branchée entre deux plots de codage et les plots de codage sont reliés entre eux au moyen d'une piste conductrice commune et les tronçons de piste conductrice peuvent être interrompus entre deux plots de codage.

9. Dispositif de mesure de force suivant l'une des revendications 1 à 8, caractérisé en ce que les résistances individuelles dépendant de la température sont branchées entre deux plots de codage au moyen de pistes conductrices dérivées.

10. Dispositif de mesure de force suivant l'une des revendications 1 à 9, caractérisé en ce que dans l'ordre des plots de codage consécutifs, une résistance individuelle est branchée entre deux plots de codage consécutifs de numéros pairs et une résistance individuelle est branchée entre deux plots de codage consécutifs de numéros impairs.

11. Dispositif de mesure de force suivant l'une des revendications 1 à 10, caractérisé en ce qu'un shunt déséquilibrant le pont de mesure pour un laps de temps déterminé peut être branché au pont de mesure lors du branchement de la tension d'alimentation.

12. Dispositif de mesure de force suivant la revendication 11, caractérisé en ce que le shunt est réglé sur la sensibilité totale du convertisseur de mesure.

13. Dispositif de mesure de force suivant la revendication 11 ou 12, caractérisé en ce qu'un shunt supplémentaire de réglage du point de fonctionnement du convertisseur de mesure peut être branché dans le pont de mesure.
